# EUROPÄISCHE PATENTSCHRIFT

(11) **EP 3 562 885 B1**
(45) Veröffentlichungstag und Bekanntmachung des Hinweises auf die Patenterteilung: **19.08.2020**
(21) Anmeldenummer: 17821925.9
(22) Anmeldetag: 22.12.2017
(51) Int. Cl.: C08L 69/00, C08L 25/12, C08L 55/02

(54) **POLYCARBONAT-ZUSAMMENSETZUNGEN MIT GUTEN MECHANISCHEN EIGENSCHAFTEN**
POLYCARBONATE COMPOSITIONS WITH GOOD MECHANICAL PROPERTIES
COMPOSITIONS DE POLYCARBONATE DOTÉES DE BONNES PROPRIÉTÉS MÉCANIQUES

(30) Priorität: 28.12.2016 EP 16207040
(43) Veröffentlichungstag der Anmeldung: 06.11.2019
(73) Patentinhaber: Covestro Deutschland AG, 51373 Leverkusen (DE)
(72) Erfinder: SEIDEL, Andreas, 41542 Dormagen (DE); HOBEIKA, Sven, 42699 Solingen (DE); BÄRWINKEL, Stephanie, 95448 Bayreuth (DE); AKSIT, Merve, 95444 Bayreuth (DE); ALTSTÄDT, Volker, 20099 Hamburg (DE)
(74) Vertreter: Levpat
(86) Internationale Anmeldenummer: PCT/EP2017/084285
(87) Internationale Veröffentlichungsnummer: WO 2018/122141

(56) Entgegenhaltungen:
- EP-A1- 0 062 838
- EP-A1- 0 628 601
- EP-A2- 0 219 090
- US-A1- 2009 143 512

## Beschreibung

Die vorliegende Erfindung betrifft thermoplastische schlagzähmodifizierte Polycarbonat-Zusammensetzungen, ein Verfahren zur Herstellung von thermoplastischen Polycarbonat-Zusammensetzungen, die Verwendung der Zusammensetzungen zur Herstellung von Formkörpern und die Formkörper selbst.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Polycarbonat als solches zeichnet sich durch eine sehr gute Wärmeformbeständigkeit und eine hohe Schlagzähigkeit bei Raumtemperatur aus. Zur Verbesserung der Zähigkeit bei tiefen Temperaturen wird das Polycarbonat mit polymeren Blendpartnern mit niedrigen Glasübergangstemperaturen als elastische Komponente gemischt.

Als solche Schlagzähmodifikatoren werden beispielsweise Pfropfpolymere mit einer Kern-Schale Struktur aus einem butadienhaltigen Kern und einer Pfropfhülle aus Vinyl(co)polymer eingesetzt, welche eine (Teil)Verträglichkeit des Modifikators mit dem Polycarbonat und eventuell in der Mischung enthaltenen weiteren Polymerkomponenten sicherstellen soll. Zur Realisierung einer besseren Schmelzefließfähigkeit werden solchen Zusammensetzungen beispielsweise des Weiteren oft freies, d.h. nicht an eine Pfropfgrundlage gebundenes Vinyl(co)polymer zugesetzt. In einer kommerziell üblichen Ausführungsform handelt es sich bei den Vinylcopolymeren sowohl der Pfropfhülle als auch bei den nicht an eine Pfropfgrundlage gebundenen Vinylcopolymeren um Copolymere bestehend aus Styrol und Acrylnitril (SAN). Dabei können sich das freie SAN und das SAN aus der Pfropfhülle hinsichtlich der Molekulargewichte und der jeweiligen Anteile von Styrol und Acrylnitril unterscheiden.

PC/ABS-Zusammensetzungen (Polycarbonat/Acrylnitril/Butadien/Styrol) mit hoher Zähigkeit bei tiefen Temperaturen, die dadurch gekennzeichnet sind, dass die Pfropfpolymerisate und/oder die Copolymerisate zumindest teilweise durch Pfropfpolymerisate und/oder Copolymerisate ersetzt sind, in denen die Pfropfauflage und/oder das Copolymerisat mindestens 86 Gew.-% Vinylaromaten, d.h. maximal 14 Gew.-% nicht-vinylaromatische Comonomere wie beispielsweise Acrylnitril enthält, werden in EP 0 372 336 A2 beschrieben. In dieser Anmeldungen werden auch solche PC/ABS-Zusammensetzungen enthaltend Polycarbonat, ABS-Pfropfpolymer und SAN-Copolymer offenbart, in denen die Zusammensetzung der Pfropfhülle des ABS-Pfropfpolymers und des freien SAN-Copolymers voneinander abweichen. Bei den offenbarten Zusammensetzungen ist jedoch der Acrylnitrilgehalt im SAN-Copolymer entweder niedriger oder um maximal 1 Gew.-% höher als in der SAN-Pfropfhülle des jeweiligen ABS-Pfropfpolymers.

DE 102 55 825 A1 offenbart PC/ABS-Zusammensetzungen mit verbesserter Oberflächenqualität, enthaltend eine durch Cofällung erhaltene Mischung aus mindestens einem durch Emulsionspolymerisation hergestellten kautschukhaltigen Pfropfpolymerisat und mindestens einem durch Emulsionspolymerisation hergestellten kautschukfreien thermoplastischen Vinyl(co)polymerisat, sowie mindestens ein durch Lösungs-, Masse- oder Suspensionspolymerisation hergestelltes kautschukfreies thermoplastisches Vinyl(co)polymerisat, wobei sich in einer bevorzugten Ausführungsform die beiden kautschukfreien Vinyl(co)polymerisate im Acrylnitrilgehalt um 1 bis 15 Gew.-%, vorzugsweise um 2 bis 10 Gew.-%, besonders bevorzugt um 2,5 bis 7,5 Gew.-% unterscheiden. Über besondere Vorteile bei Verwendung unterschiedlicher Acrylnitrilgehalte in der Pfropfhülle des kautschukhaltigen Pfropfpolymerisats und in einem oder beider kautschukfreien Vinyl(co)polymerisate schweigt diese Anmeldung dagegen.

EP 1 910 469 A1 offenbart PC/ABS-Formmassen mit verbesserter Verarbeitungsstabilität zur Herstellung komplexer Formteile für den Automobilbau, die sich durch eine Kombination aus einer über ein weites Verarbeitungsfester hinweg guten Tieftemperaturzähigkeit und guter Spannungsrissbeständigkeit unter Chemikalieneinwirkung auszeichnen, enthaltend Polycarbonat, ABS-Pfropfpolymerisat und eine Mischung aus zwei SAN-Polymerisaten mit unterschiedlichem Acrylnitrilgehalt. Die Beispiele in diesem Dokument offenbaren Zusammensetzungen enthaltend Pfropfpolymer mit SAN-Pfropfhülle mit einem Acrylnitrilgehalt von 28 Gew.-% und eine Mischung zweier SAN-Polymere mit 23 und 28 Gew.-% Acrylnitrilgehalt. Es werden somit ausschließlich solche Zusammensetzungen offenbart, in denen der Gehalt an Acrylnitril im freien (d.h. nicht kautschukgebundenen) SAN kleiner ist als der Acrylnitrilgehalt in der Hülle des Pfropfpolymers.

EP 0 062 838 beschreibt eine thermoplastische Formmasse, die aus einem Polycarbonat A, einem Pfropfmischpolymerisat B (z.B. ASA, ABS, AES), einem Copolymerisat C aus Styrol und/oder α-Methylstyrol mit Acrylnitril, einem Terpolymerisat D, und gegebenenfalls üblichen Zusatzstoffen besteht. Die Formmassen zeichnen sich durch eine verbesserte Zähigkeit und verbesserte Wärmeformbeständigkeit aus. Aus den Formmassen werden Formteile durch Spritzgießen für den Automobilbau hergestellt.

EP 0 628 601 beschreibt Mischung aus einem aromatischem Polycarbonat und einem ABS-Pfropfcopolymer. Die Mischung wird zur Herstellung von Formkörpern benutzt. Die Formkörper zeichnen sich durch reduzierten Glanz und reduzierte Opazität aus.

US 2009/143512) beschreibt Mischungen aus a) 60-95 Gew.-Teilen aromatischem Polycarbonat, b) 4-39 Gew.-Teilen Styrol-(Meth)Acrylnitril-Copolymer gepfropft auf Kautschuk und b') 1-36 Gew.-Teilen ungepfropftem Styrol-(Meth)Acrylnitril-Copolymer. Die Zusammensetzungen zeichnen sich durch gute Bindenahtfestigkeit aus.

Polycarbonat/ABS-Zusammensetzungen werden auch zur Herstellung von Formteilen mit komplexen Geometrien oder dünnen Wandstärken eingesetzt. Bei den verwendeten Spritzgussverfahren wird die aufgeschmolzene Formmasse oft an mehreren Stellen gleichzeitig in die Form eingeleitet, so dass die fertigen Bauteile Bindenähte aufweisen, an denen die Schmelzefronten beim Spritzguss aufeinandertreffen. Solche Bindenähte stellen insbesondere bei Polymerblends in der Regel Schwachstellen hinsichtlich der mechanischen Festigkeit dar. Ein geeignetes Maß für die mechanische Festigkeit der Bindenähte ist die Bindenahtzugfestigkeit.

Weiterhin werden die Formkörper nicht nur schnellen mechanischen Schlag- oder Stoßbelastungen mit hohen lokalen Spannungen ausgesetzt, sondern es können auch über einen längeren Zeitraum geringere, optional periodisch auftretende lokale mechanische Spannungen wirken, die dann zu einer Materialermüdung führen können. Ein geeignetes Maß für diese Art von Materialversagen ist das Ermüdungsrissverhalten.

Schließlich können die Bauteile zusätzlich zu den mechanischen Spannungen auch aggressiven Medien wie Reinigungsmitteln, Desinfektionsmitteln oder Sonnencreme ausgesetzt sein, wodurch Schädigungen oder Materialbrüche ausgelöst werden.
Diese Materialeigenschaft lässt sich in geeigneter Weise mittels der Spannungsrissbeständigkeit beschreiben.

Im Stand der Technik wird nicht offenbart, wie sich Polycarbonat/ABS-Zusammensetzungen hinsichtlich der Bindenahtzugfestigkeit, Ermüdungsrissverhalten und Spannungsrissbeständigkeit verbessern lassen.

Es war daher wünschenswert, PC/ABS-Zusammensetzungen bereitzustellen, die sich durch eine vorteilhafte Kombination aus mechanischer Festigkeit von Bindenähten, Materialermüdungsverhalten und Chemikalienbeständigkeit auszeichnen.

Es wurde nunmehr überraschenderweise gefunden, dass Zusammensetzungen enthaltend
A) 10 bis 90 Gew.-%, bevorzugt 40 bis 90 Gew.-%, besonders bevorzugt 50 bis 75 Gew.-% aromatisches Polycarbonat und/oder Polyestercarbonat,
B) 1 bis 50 Gew.-%, bevorzugt 5 bis 40 Gew.-%, besonders bevorzugt 10 bis 30 Gew.-% kautschukbasiertes Pfropfpolymer mit einer Pfropfhülle B.1) bestehend aus mindestens 95 Gew.-%, bevorzugt mindestens 97 Gew.-%, besonders bevorzugt mindestens 99 Gew.-%, jeweils bezogen auf die Komponente B.1), B.1.1) Styrol und B.1.2) Acrylnitril und optional maximal 5 Gew.-%, bevorzugt maximal 3 Gew.-%, besonders bevorzugt maximal 1 Gew.-%, jeweils bezogen auf die Komponente B.1), mindestens eines weiteren mit B.1.1) und B.1.2) copolymerisierbaren Vinylmonomeren B.1.3) sowie einer kautschukartigen, bevorzugt partikulären Pfropfgrundlage B.2),
C) 1 bis 50 Gew.-%, bevorzugt 5 bis 40 Gew.-%, besonders bevorzugt 10 bis 30 Gew kautschukfreies Copolymer bestehend aus mindestens 95 Gew.-%, bevorzugt mindestens 97 Gew.-%, besonders bevorzugt mindestens 99 Gew.-%, jeweils bezogen auf die Komponente C), C.1) Styrol und C.2) Acrylnitril und optional maximal 5 Gew.-%, bevorzugt maximal 3 Gew.-%, besonders bevorzugt maximal 1 Gew.-%, jeweils bezogen auf die Komponente C), mindestens eines weiteren mit C.1) und C.2) copolymerisierbaren Vinylmonomeren C.3),
dadurch gekennzeichnet, dass der Gehalt an Acrylnitril C.2) in der Komponente C) um 1,5 bis 8,0 Gew.-%, bevorzugt von 2,0 bis 6,0 Gew.-%, besonders bevorzugt von 2,5 bis 4,5 Gew.-% höher ist als der Gehalt an Acrylnitril B.1.2) in der Pfropfhülle B.1) von Komponente B) und dass die Komponente C ein gewichtsgemitteltes Molekulargewicht Mw bestimmt durch Gelpermeationschromatographie (GPC) in Tetrahydrofuran mit Polystyrol als Standard von 70 bis 200 kDa aufweist,
das gewünschte Eigenschaftsprofil aufweisen.

Die Zusammensetzungen können optional als Komponente D) Polymeradditive enthalten, bevorzugt von 0,1 bis 40 Gew.-%, besonders bevorzugt von 0,1 bis 10 Gew.-%.

In einer weiteren Ausführungsform besteht die Pfropfhülle B.1) des kautschukbasierten Pfropfpolymers B) aus B.1.1) Styrol und B.1.2) Acrylnitril.

In einer weiteren Ausführungsform besteht das kautschukfreie Copolymer C) aus C.1) Styrol und C.2) Acrylnitril.

Besonders bevorzugt ist die Ausführungsform, in der sowohl die Pfropfhülle B.1) des kautschukbasierten Pfropfpolymers B) als auch das kautschukfreie Copolymer C) aus Styrol und Acrylnitril bestehen.

In einer weiteren Ausführungsform kommt ein kautschukbasiertes Pfropfpolymer B) mit einer Pfropfhülle B.1) bestehend aus mindestens 95 Gew.-%, bevorzugt mindestens 97 Gew.-%, besonders bevorzugt mindestens 99 Gew.-%, jeweils bezogen auf die Komponente B.1), an B.1.1) Styrol und B.1.2) Acrylnitril und optional maximal 5 Gew.-%, bevorzugt maximal 3 Gew.-%, besonders bevorzugt maximal 1 Gew.-%, jeweils bezogen auf die Komponente B.1), an mindestens einem weiteren mit B.1.1) und B.1.2) copolymerisierbaren Vinylmonomeren B.1.3) zum Einsatz, wobei das Gewichtsverhältnis der Komponenten B.1.1) zu B.1.2) im Bereich von 68/32 bis 80/20, bevorzugt 70/30 bis 77/23 und besonders bevorzugt 71/29 bis 75/25 liegt.

In einer weiteren Ausführungsform kommt ein kautschukbasiertes Pfropfpolymer B) mit einer Pfropfhülle B.1) bestehend aus 68 bis 80 Gew.-%, bevorzugt 70 bis 77 Gew.-% und besonders bevorzugt 71 bis 75 Gew.-% B.1.1) Styrol und 20 bis 32 Gew.-%, bevorzugt 23 bis 30 Gew.-% und besonders bevorzugt 25 bis 29 Gew.-% B.1.2) Acrylnitril zum Einsatz.

In einer weiteren Ausführungsform besteht die Komponente B.1) zu 71 bis 75 Gew.-% aus B.1.1) Styrol und zu 25 bis 29 Gew.-% aus B.1.2) Acrylnitril, die Komponente C) zu 66,5 bis 72,5 Gew.-% aus C.1) Styrol und zu 27,5 bis 33,5 Gew.-% aus C.2) Acrylnitril und zusätzlich gilt die Bedingung, dass C.2) um 2,5 bis 4,5 Gew.-% höher als B.1.2) ist.

In einer weiteren Ausführungsform bestehen die Zusammensetzungen zu mindestens 95 Gew.-% aus den Komponenten A), B), C) und D). In einer bevorzugten Ausführungsform bestehen sie aus den Komponenten A), B), C) und D).

In einer weiteren Ausführungsform liegt Gewichtsverhältnis der Komponenten B) zu C) im Bereich 1:3 bis 3:1, bevorzugt im Bereich von 1:2 bis 2:1.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte M_{w} bestimmt durch GPC (Gelpermeationschromatographie in Methylenchlorid mit Polycarbonat als Standard) von 15.000 g/mol bis 50.000 g/mol, bevorzugt von 20.000 g/mol bis 35.000 g/mol, besonders bevorzugt von 23.000 g/mol bis 33.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 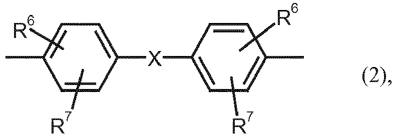 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂- oder für einen Rest der Formel (2a)

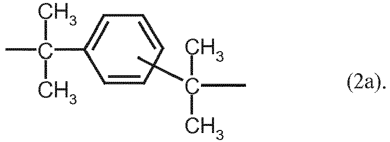

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1 -Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1 -Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

### Komponente B

Bei der Komponente B) handelt es sich um kautschukmodifizierte Pfropfpolymerisate.

Als Komponente B) zum Einsatz kommende kautschukmodifizierte Pfropfpolymerisate bestehen aus
B.1) 5 bis 95 Gew.-%, vorzugsweise 15 bis 92 Gew.-%, insbesondere 25 bis 60 Gew.-%, bezogen auf Komponente B), eine Mischung bestehend aus mindestens 95 Gew.-%, bevorzugt mindestens 97 Gew.-%, besonders bevorzugt mindestens 99 Gew.-%, jeweils bezogen auf die Komponente B.1), B.1.1) Styrol und B.1.2) Acrylnitril und optional maximal 5 Gew.-%, bevorzugt maximal 3 Gew.-%, besonders bevorzugt maximal 1 Gew.-%, jeweils bezogen auf die Komponente B.1), mindestens ein weiteres mit B.1.1) und B.1.2) copolymerisierbares Vinylmonomer B.1.3) und
B.2) 95 bis 5 Gew.-%, vorzugsweise 85 bis 8 Gew.-%, insbesondere 75 bis 40 Gew.-%, bezogen auf Komponente B), einer oder mehrerer kautschukartiger, in bevorzugter Form partikulärer Pfropfgrundlagen, vorzugsweise mit Glasübergangstemperaturen < 10°C, weiter bevorzugt < 0°C, besonders bevorzugt < -20°C,
wobei die aus den Monomeren B.1) gebildeten Polymerketten chemisch an die Pfropfgrundlage B.2) gebunden sind oder in den Kautschukpartikeln so eingeschlossen sind, dass sie bei der Herstellung und Verarbeitung der erfindungsgemäßen Zusammensetzungen nicht aus den Kautschukpartikeln austreten.

Die Glasübergangstemperatur wird mittels dynamischer Differenzkalorimetrie (DSC) gemäß der Norm DIN EN 61006 (Version von 2004) bei einer Heizrate von 10 K/min mit Definition der T_{g} als Mittelpunkttemperatur (Tangentenmethode) bestimmt.

Die bevorzugten partikulären Pfropfgrundlagen B.2) haben im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Monomere B.1.3) sind vorzugsweise ausgewählt aus von B.1.1) verschiedenen Vinylaromaten (beispielsweise α-Methylstyrol, p-Methylstyrol, p-Chlorstyrol), von B.1.2) verschiedenen Vinylcyaniden (beispielsweise Methacrylnitril), (Meth)Acrylsäure-(C₁-C₈)-Alkylestern (beispielsweise Methylmethacrylat, Ethylmethacrylat, n-Butylacrylat, t- Butylacrylat) und/oder Derivaten (wie Anhydriden und Imiden) ungesättigter Carbonsäuren (beispielsweise Maleinsäureanhydrid und N-Phenyl-Maleinimid).

Für die Pfropfpolymerisate B) geeignete Pfropfgrundlagen B.2) sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.2) sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1) und B.1.2)).

Besonders bevorzugt als Pfropfgrundlage B.2) ist reiner Polybutadienkautschuk.

Besonders bevorzugte Pfropfpolymerisate B) sind beispielsweise ABS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B) werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Der Gelanteil der Pfropfgrundlage B.2) beträgt mindestens 30 Gew.-%, vorzugsweise mindestens 40 Gew.-%, insbesondere mindestens 60 Gew.-%, jeweils bezogen auf B.2) und gemessen als unlöslicher Anteil in Toluol.

Der Gelgehalt der Pfropfgrundlage B.2) wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfpolymerisate B) sind auch ABS-Polymerisate, die durch Redox-Initiierung mit einem Initiatorsystem aus organischem Hydroperoxid und Ascorbinsäure gemäß US-P 4 937 285 hergestellt werden.

Bei der Pfropfung werden die Pfropfmonomere B.1) bekanntlich nicht unbedingt vollständig auf die Pfropfgrundlage aufgepfropft. Produkte von Pfropfungsreaktionen enthalten insofern oft noch signifikante Anteile an freiem (d.h. nicht chemisch an die Pfropfgrundlage gebundenem) Copolymerisat mit einer Zusammensetzung analog zu dem der Pfropfhülle. Im Sinne der vorliegenden Erfindung wird unter Komponente B) ausschließlich das wie oben definierte Pfropfpolymer verstanden, während das herstellungsbedingt enthaltene nicht chemisch an die Pfropfgrundlage gebundene und nicht in die Kautschukpartikel eingeschlossene Copolymerisat der Komponente C) zugeordnet wird.

Der Anteil an diesem freiem Copolymer in Produkten von Pfropfungsreaktionen lässt sich aus deren Gelgehalten ermitteln (Anteil an freiem Copolymer = 100 Gew.-% - Gel-Gehalt des Produktes in Gew.-%), wobei der Gelgehalt bei 25°C in einem geeigneten Lösungsmittel (wie etwa Aceton) als in diesen Lösungsmitteln unlöslicher Anteil bestimmt wird.

Geeignete Acrylatkautschuke gemäß B.2) sind vorzugsweise Polymerisate aus Acrylsäurealkylestern, gegebenenfalls mit bis zu 40 Gew.-%, bezogen auf B.2) anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B. 2). Bei cyclischen vernetzenden Monomeren mit mindestens drei ethylenisch ungesättigten Gruppen ist es vorteilhaft, die Menge auf unter 1 Gew.-% der Pfropfgrundlage B. 2) zu beschränken.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

In einer weiteren Ausführungsform kommt ein kautschukbasiertes Pfropfpolymer B) mit einer Pfropfhülle B.1) bestehend aus mindestens 95 Gew.-%, bevorzugt mindestens 97 Gew.-%, besonders bevorzugt mindestens 99 Gew.-%, jeweils bezogen auf die Komponente B.1), an B.1.1) Styrol und B.1.2) Acrylnitril und optional maximal 5 Gew.-%, bevorzugt maximal 3 Gew.-%, besonders bevorzugt maximal 1 Gew.-%, jeweils bezogen auf die Komponente B.1), an mindestens einem oder weiteren mit B.1.1) und B.1.2) copolymerisierbaren Vinylmonomeren B.1.3) zum Einsatz, wobei das Gewichtsverhältnis der Komponenten B.1.1) zu B.1.2) im Bereich von 68/32 bis 80/20, bevorzugt 70/30 bis 77/23 und besonders bevorzugt 71/29 bis 75/25 liegt.

In einer besonders bevorzugten Ausführungsform kommt ein kautschukbasiertes Pfropfpolymer B) mit einer Pfropfhülle B.1) bestehend aus 68 bis 80 Gew.-%, bevorzugt 70 bis 77 Gew.-%, besonders bevorzugt 71 bis 74 Gew.-% B.1.1) Styrol und 20 bis 32 Gew.-%, bevorzugt 23 bis 30 Gew.-%, besonders bevorzugt 26 bis 29 Gew.-% B.1.2) Acrylnitril zum Einsatz.

In einer weiteren Ausführungsform beträgt die Kautschukmenge in der Zusammensetzung berechnet als Produkt aus der Menge der Komponente B) in der Zusammensetzung in Gew.-% und dem Gewichtsanteil der Komponente B.2) in B) zwischen 7 und 15 Gew.-%.

### Komponente C

Die Zusammensetzung enthält als weitere Komponente C) kautschukfreies Copolymer bestehend aus mindestens 95 Gew.-%, bevorzugt mindestens 97 Gew.-%, besonders bevorzugt mindestens 99 Gew.-%, jeweils bezogen auf die Komponente C), C.1) Styrol und C.2) Acrylnitril und optional maximal 5 Gew.-%, bevorzugt maximal 3 Gew.-%, besonders bevorzugt maximal 1 Gew.-%, jeweils bezogen auf die Komponente C), mindestens ein weiteres mit C.1) und C.2) copolymerisierbares VinylmonomerC.3) ausgewählt aus der Gruppe umfassend von C.1) verschiedenen Vinylaromaten (beispielsweise α-Methylstyrol, p-Methylstyrol, p-Chlorstyrol), von C.2) verschiedenen Vinylcyaniden (beispielsweise Methacrylnitril), (Meth)Acrylsäure-(C₁-C₈)-Alkylestern (beispielsweise Methylmethacrylat, Ethylmethacrylat, n-Butylacrylat, t- Butylacrylat) und/oder Derivaten (wie Anhydriden und Imiden) ungesättigter Carbonsäuren (beispielsweise Maleinsäureanhydrid und N-Phenyl-Maleinimid).

Besonders bevorzugt geeignet sind als Komponente C) kautschukfreie Copolymere bestehend aus C.1) Styrol und C.2) Acrylnitril.

Die jeweiligen Anteile von C.1) und C.2) in Komponente C) ergeben sich aus den Anteilen B.1.1) und B.1.2) in der Pfropfhülle B.1) der Komponente B) gemäß der Beschreibung der Komponente B) und dem anspruchsgemäßen Merkmal, dass der Gehalt an Acrylnitril C.2) in der Komponente C) um 1,5 bis 8,0 Gew.-%, bevorzugt von 2,0 bis 6,0 Gew.-%, besonders bevorzugt von 2,5 bis 4,5 Gew.-% höher ist als der Gehalt an Acrylnitril B.1.2) in der Pfropfhülle B.1) von Komponente B).

Diese kautschukfreien Copolymere C) sind harzartig, thermoplastisch und kautschukfrei.

Derartige kautschukfreien Copolymere C) sind bekannt und lassen sich durch radikalische Polymerisation, insbesondere durch Emulsions-, Suspensions-, Lösungs- oder Massepolymerisation herstellen.

Das kautschukfreie Copolymer C) weist ein gewichtsgemitteltes Molekulargewicht Mw bestimmt durch Gelpermeationschromatographie (GPC) in Tetrahydrofuran mit Polystyrol als Standard von 70 bis 200, bevorzugt 70 bis 170 kDa, weiter bevorzugt von 80 bis 150 kDa, besonders bevorzugt von 90 bis 140 kDa, ganz besonders bevorzugt von 95 bis 120 kDa auf.

Als Komponente C) können auch Mischungen mehrerer kautschukfreier Copolymere unterschiedlicher Monomerzusammensetzung und/oder unterschiedlichen Molekulargewichtes zum Einsatz kommen, bestehend jeweils aus mindestens 95 Gew.-%, bevorzugt aus mindestens 97 Gew.-%, besonders bevorzugt aus mindestens 99 Gew.-%, jeweils bezogen auf das individuelle kautschukfreie Copolymer, C.1) Styrol und C.2) Acrylnitril und optional maximal 5 Gew.-%, bevorzugt maximal 3 Gew.-%, besonders bevorzugt maximal 1 Gew.-%, jeweils bezogen auf das individuelle kautschukfreie Copolymer, aus mindestens einem weiteren mit C.1) und C.2) copolymerisierbaren Vinylmonomer C.3) ausgewählt aus der Gruppe umfassend von C.1) verschiedene Vinylaromaten (beispielsweise α-Methylstyrol, p-Methylstyrol, p-Chlorstyrol), von C.2) verschiedenen Vinylcyaniden (beispielsweise Methacrylnitril), (Meth)Acrylsäure-(C1-C8)-Alkylester (beispielsweise Methylmethacrylat, Ethylmethacrylat, n-Butylacrylat, t- Butylacrylat) und/oder Derivate (wie Anhydriden und Imiden) ungesättigter Carbonsäuren (beispielsweise Maleinsäureanhydrid und N-Phenyl-Maleinimid).

In diesem Fall, in dem als Komponente C) Mischungen mehrerer kautschukfreier Copolymere unterschiedlicher Monomerzusammensetzung und/oder unterschiedlichen Molekulargewichtes zum Einsatz kommen, enthält jedes individuelle kautschukfreie Copolymer C) Styrol und Acrylnitril in einem Gewichtsverhältnis von 90/10 bis 60/40. Des Weiteren weist jedes individuelle kautschukfreie Copolymer C) ein gewichtsgemitteltes Molekulargewicht Mw bestimmt durch Gelpermeationschromatographie (GPC) in Tetrahydrofuran mit Polystyrol als Standard von 70 bis 200 kDa auf.

Im Falle, dass als Komponente C) eine Mischung mehrerer kautschukfreier Copolymere unterschiedlicher Monomerzusammensetzung und/oder unterschiedlichen Molekulargewichtes zum Einsatz kommt, gelten die zuvor genannten Spezifikationen und bevorzugten Bereiche hinsichtlich der Monomerzusammensetzung und des Molekulargewichtes der Komponente C) für die jeweiligen mit den Massenanteile gewichteten Mittelwerte aller kautschukfreien Copolymere in der Zusammensetzung.

### Komponente D

Die Zusammensetzung kann als Komponente D ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente B verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Glas- oder Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, weiteren polymeren Bestandteilen, Farbstoffen und Pigmenten.

In bevorzugter Ausführungsform enthalten die Zusammensetzungen keinen Polyester.

In besonders bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, Farbstoffen und Pigmenten und ist frei von weiteren Polymeradditiven.

In bevorzugter Ausführungsform enthält die Zusammensetzung mindestens ein Polymeradditiv ausgewählt aus der Gruppe bestehend aus Gleit-/Entformungsmitteln und Stabilisatoren.

In besonders bevorzugter Ausführungsform enthält die Zusammensetzung mindestens ein Polymeradditiv ausgewählt aus der Gruppe bestehend aus Gleit-/Entformungsmitteln, Stabilisatoren, Farbstoffen und Pigmenten und ist frei von weiteren Polymeradditiven.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure und sind frei von weiteren Polymeradditiven.

Weiter bevorzugte Zusammensetzungen enthalten als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit, optional eine Brönstedt-Säure und sind frei von weiteren Polymeradditiven.

Nachfolgend werden weitere Ausführungsformen 1 bis 25 der vorliegenden Erfindung beschrieben:
1. Zusammensetzungen enthaltend
   A) 10 bis 90 Gew.-% aromatisches Polycarbonat und/oder Polyestercarbonat,
   B) 1 bis 50 Gew.-% kautschukbasiertes Pfropfpolymer mit einer Pfropfhülle B.1) bestehend aus mindestens 95 Gew.-%, bezogen auf die Komponente B.1), B.1.1) Styrol und B.1.2) Acrylnitril und optional maximal 5 Gew.-%, bezogen auf die Komponente B.1), mindestens eines weiteren mit B.1.1) und B.1.2) copolymerisierbaren Vinylmonomeren B.1.3) sowie einer kautschukartigen Pfropfgrundlage B.2),
   C) 1 bis 50 Gew.-% kautschukfreies Copolymer bestehend aus mindestens 95 Gew.-%, bezogen auf die Komponente C), C.1) Styrol und C.2) Acrylnitril und optional maximal 5 Gew.-%, bezogen auf die Komponente C), mindestens eines weiteren mit C.1) und C.2) copolymerisierbaren Vinylmonomeren C.3),
   dadurch gekennzeichnet, dass der Gehalt an Acrylnitril C.2) in der Komponente C) um 1,5 bis 8,0 Gew.-%, höher ist als der Gehalt an Acrylnitril B.1.2) in der Pfropfhülle B.1) von Komponente B)) und dass die Komponente C ein gewichtsgemitteltes Molekulargewicht Mw bestimmt durch Gelpermeationschromatographie (GPC) in Tetrahydrofuran mit Polystyrol als Standard von 70 bis 200 kDa aufweist.
2. Zusammensetzungen gemäß Ausführungsform 1, wobei das Gewichtsverhältnis der Komponenten B.1.1) zu B.1.2) im Bereich von 68/32 bis 80/20 liegt.
3. Zusammensetzungen gemäß einer der vorherigen Ausführungsformen, wobei die Komponente B.1) zu mindestens 97 Gew.-%, bezogen auf die Komponente B.1) aus B.1.1) Styrol und B.1.2) Acrylnitril und optional maximal 3 Gew.-%, bezogen auf die Komponente B.1), aus mindestens einem weiteren mit B.1.1) und B.1.2) copolymerisierbaren Vinylmonomeren B.1.3) besteht.
4. Zusammensetzungen gemäß einer der vorherigen Ausführungsformen, wobei die Komponente B.1) zu mindestens 99 Gew.-%, bezogen auf die Komponente B.1) aus B.1.1) Styrol und B.1.2) Acrylnitril und optional maximal 1 Gew.-%, bezogen auf die Komponente B.1), aus mindestens einem weiteren mit B.1.1) und B.1.2) copolymerisierbaren Vinylmonomeren B.1.3) besteht.
5. Zusammensetzungen gemäß einer der vorherigen Ausführungsformen, wobei die Komponente B.1) aus B.1.1) Styrol und B.1.2) Acrylnitril besteht.
6. Zusammensetzungen gemäß einer der vorherigen Ausführungsformen, enthaltend
   40 bis 90 Gew.-% der Komponente A,
   5 bis 40 Gew.-% der Komponente B,
   5 bis 40 Gew.-% der Komponente C,
   0,1 bis 40 Gew.-% Polymeradditive als Komponente D).
7. Zusammensetzungen gemäß einer der vorherigen Ausführungsformen, enthaltend
   50 bis 75 Gew.-% der Komponente A,
   10 bis 30 Gew.-% der Komponente B,
   10 bis 30 Gew.-% der Komponente C,
   0,1 bis 10 Gew.-% der Komponente D
8. Zusammensetzungen gemäß einer der vorherigen Ausführungsformen, wobei das Gewichtsverhältnis der Komponenten B) zu C) im Bereich 1:3 bis 3:1 liegt.
9. Zusammensetzungen gemäß einer der vorherigen Ausführungsformen, wobei das Gewichtsverhältnis der Komponenten B) zu C) im Bereich 1:2 bis 2:1 liegt.
10. Zusammensetzungen gemäß einer der vorherigen Ausführungsformen, wobei die Komponente C) ein gewichtsgemitteltes Molekulargewicht Mw von 70 bis 170 kDa bestimmt durch Gelpermeationschromatographie (GPC) in Tetrahydrofuran mit Polystyrol als Standard aufweist.
11. Zusammensetzungen gemäß einer der vorherigen Ausführungsformen, wobei die Komponente C) ein gewichtsgemitteltes Molekulargewicht Mw von 80 bis 150 kDa bestimmt durch Gelpermeationschromatographie (GPC) in Tetrahydrofuran mit Polystyrol als Standard aufweist.
12. Zusammensetzungen gemäß einer der vorherigen Ausführungsformen, wobei die Komponente C) ein gewichtsgemitteltes Molekulargewicht Mw von 90 bis 140 kDa bestimmt durch Gelpermeationschromatographie (GPC) in Tetrahydrofuran mit Polystyrol als Standard aufweist.
13. Zusammensetzungen gemäß einer der vorherigen Ausführungsformen, wobei die Komponente C) ein gewichtsgemitteltes Molekulargewicht Mw von 95 bis 120 kDa bestimmt durch Gelpermeationschromatographie (GPC) in Tetrahydrofuran mit Polystyrol als Standard aufweist.
14. Zusammensetzungen gemäß einer der vorherigen Ausführungsformen, wobei die Komponente B) zu 8 bis 85 Gew.-% aus einer kautschukartigen und partikulären Pfropfgrundlage B.2) mit einer Glasübergangstemperatur von < 0 °C besteht.
15. Zusammensetzungen gemäß einer der vorherigen Ausführungsformen, wobei die Komponente B) zu 40 bis 75 Gew.-% aus einer kautschukartigen und partikulären Pfropfgrundlage B.2) mit einer Glasübergangstemperatur von < -20 °C besteht.
16. Zusammensetzungen gemäß einer der vorherigen Ausführungsformen, wobei der Gehalt an Acrylnitril C.2) in der Komponente C) um 2,0 bis 6,0 Gew.-% höher ist als der Gehalt an Acrylnitril B.1.2) in der Pfropfhülle von Komponente B).
17. Zusammensetzungen gemäß einer der vorherigen Ausführungsformen, wobei der Gehalt an Acrylnitril C.2) in der Komponente C) um 2,5 bis 4,5 Gew.-% höher ist als der Gehalt an Acrylnitril B.1.2) in der Pfropfhülle von Komponente B).
18. Zusammensetzungen gemäß einer der vorherigen Ausführungsformen, wobei das Gewichtsverhältnis der Komponenten B.1.1) zu B.1.2) im Bereich von 70/30 bis 77/23 liegt.
19. Zusammensetzungen gemäß einer der vorherigen Ausführungsformen, wobei das Gewichtsverhältnis der Komponenten B.1.1) zu B.1.2) im Bereich von 71/29 bis 75/25 liegt.
20. Zusammensetzungen gemäß einer der vorherigen Ausführungsformen, wobei die Kautschukmenge in der Zusammensetzung berechnet als Produkt aus der Menge der Komponente B) in der Zusammensetzung in Gew.-% und dem Gewichtsanteil der Komponente B.2) in B) zwischen 7 und 15 Gew.-% liegt.
21. Zusammensetzungen gemäß einer der vorherigen Ausführungsformen, wobei als Komponente D) mindestens ein Polymeradditiv eingesetzt wird ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, Farbstoffen und Pigmenten und die Zusammensetzungen frei sind von weiteren Polymeradditiven.
22. Zusammensetzungen gemäß einer der vorherigen Ausführungsformen, wobei die Zusammensetzungen zu mindestens 95 Gew.-% aus den Komponenten A), B), C) und D) bestehen.
23. Zusammensetzungen gemäß einer der vorherigen Ausführungsformen, wobei die Zusammensetzungen aus den Komponenten A), B), C) und D) bestehen.
24. Verwendung von Zusammensetzungen einer der Ausführungsformen 1 bis 23 zur Herstellung von Formkörpern.
25. Formkörper hergestellt aus Zusammensetzungen gemäß einer der Ausführungsformen 1 bis 23.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Komponente A:

Lineares Polycarbonat auf Basis von Bisphenol-A mit einem gewichtsgemittelten Molekulargewicht M_{w} von 32.000 g/mol (bestimmt durch GPC in Methylenchlorid mit Polycarbonat als Standard).

### Komponente B:

Pfropfpolymerisat von 40 Gew.-Teilen eines Gemisches aus Styrol und Acrylnitril im Gew.-%-Verhältnis von 72:28 auf 60 Gew.-Teilen eines teilchenförmigen vernetzten Polybutadienkautschuks (Teilchendurchmesser von d₅₀ = 0,3 µm) hergestellt durch Emulsionspolymerisation.

### Komponente C-1:

SAN-Copolymerisat mit einem Acrylnitrilgehalt von 15 Gew.-% und einem gewichtsgemittelten Molekulargewicht von 132.000 g/mol (bestimmt durch GPC in Tetrahydrofuran mit Polystyrol als Standard).

### Komponente C-2:

SAN-Copolymerisat mit einem Acrylnitrilgehalt von 25 Gew.-% und einem gewichtsgemittelten Molekulargewicht von 93.000 g/mol (bestimmt durch GPC in Tetrahydrofuran mit Polystyrol als Standard).

### Komponente C-3:

SAN-Copolymerisat mit einem Acrylnitrilgehalt von 28 Gew.-% und einem gewichtsgemittelten Molekulargewicht von 80.000 g/mol (bestimmt durch GPC in Tetrahydrofuran mit Polystyrol als Standard).

### Komponente C-4:

SAN-Copolymerisat mit einem Acrylnitrilgehalt von 31 Gew.-% und einem gewichtsgemittelten Molekulargewicht von 100.000 g/mol (bestimmt durch GPC in Tetrahydrofuran mit Polystyrol als Standard).

### Komponente C-5:

SAN-Copolymerisat mit einem Acrylnitrilgehalt von 31 Gew.-% und einem gewichtsgemittelten Molekulargewicht von 63.000 g/mol (bestimmt durch GPC in Tetrahydrofuran mit Polystyrol als Standard).

### Komponente C-6:

SAN-Copolymerisat mit einem Acrylnitrilgehalt von 38 Gew.-% und einem gewichtsgemittelten Molekulargewicht von 100.000 g/mol (bestimmt durch GPC in Tetrahydrofuran mit Polystyrol als Standard).

### Komponente C-7:

SAN-Copolymerisat mit einem Acrylnitrilgehalt von 38 Gew.-% und einem gewichtsgemittelten Molekulargewicht von 51.000 g/mol (bestimmt durch GPC in Tetrahydrofuran mit Polystyrol als Standard).

**Komponente D:** Thermostabilisator, Irganox® B900 (Gemisch aus 80% Irgafos® 168 (Tris(2,4-di-tert-butyl-phenyl)-phosphit) und 20% Irganox® 1076 (2,6-Di-tert-butyl-4-(octadecanoxycarbonylethyl)-phenol); BASF (Ludwigshafen, Deutschland).

### Herstellung und Prüfung der erfindungsgemäfien Formmassen

Das Mischen der Komponenten erfolgte auf einem Zweiwellenextruder ZSK 26 MCC der Fa. Coperion bei einer Massetemperatur von 275°C. Die Formkörper wurden bei einer Massetemperatur von 260°C und einer Werkzeugtemperatur von 80°C auf Spritzgießmaschinen vom Typ Arburg 270 (Bindenahtzugstäbe und Prüfstäbe für Chemikalienbeständigkeitstest) bzw. Battenfeld HM 110 / 525 (Prüfkörper zur Beurteilung des Ermüdungsrissverhaltens) hergestellt.

Die Bindenahtzugfestigkeit wurde gemäß DIN EN ISO 527-2 (Version von 2012) gemessen. Dazu wurden Zugstäbe mit den Probenabmessungen 170 mm x 10 mm x 4 mm, welche mit einem doppelten Anguss auf beiden Seiten des Stabes hergestellt wurden und insofern in der Probenmitte eine Bindenaht aufwiesen, mit einer Universaltestmaschine Zwick Z020 der Firma Zwick GmbH & Co. KG (Ulm, Deutschland) bei Raumtemperatur (23 °C) und mit einer Dehnrate von 50 mm/min getestet.

Als Maß für die Chemikalienbeständigkeit diente die Spannungsriss-Beständigkeit (ESC) in Rapsöl bei Raumtemperatur. Bestimmt wurde die Zeit bis zum spannungsrissinduzierten Bruchversagen eines unter den zuvor beschriebenen Bedingungen abgespritzten Prüfkörpers der Abmessung 80 mm x 10 mm x 4 mm, der mittels einer Spannschablone mit einer externen Randfaserdehnung von 2,4 % beaufschlagt und im Medium vollständig eingetaucht war. Die Messung erfolgte gemäß DIN EN ISO 22088 (Version von 2006).

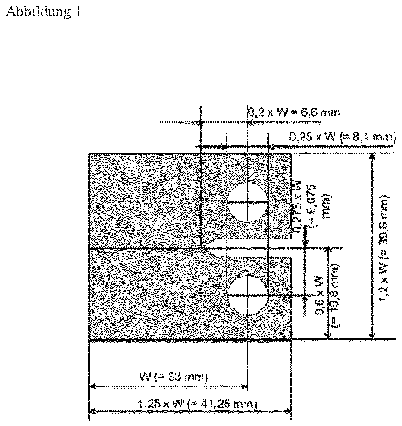

Zur Beurteilung des Ermüdungsrissverhaltens wurden die in Abbildung 1 dargestellten CT Prüfkörper verwendet. Dazu wurden zunächst Platten mit einer Geometrie von 70 mm x 70 mm x 4 mm unter den oben genannten Bedingungen im Spritzgussverfahren herstellt. Daraus wurden dann die CT Spritzkörper (Abmessungen gemäß Abbildung 1) durch Sägen mit einer Diamandsäge und Bohren erhalten. Die Kerbe mit V-Geometrie verläuft in Spritzgussrichtung.

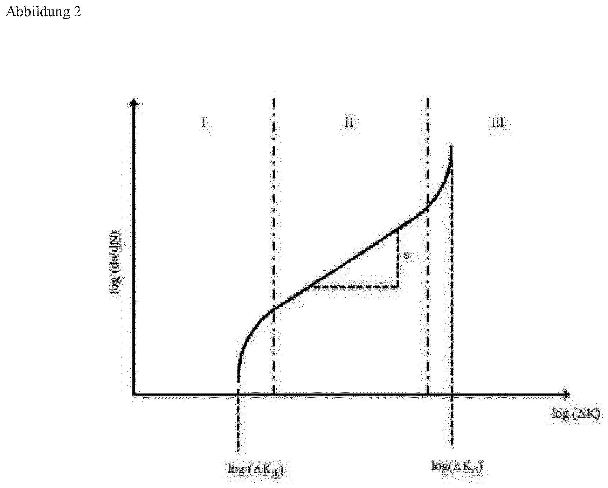

Die Messung erfolgte gemäß ISO 15850 (Version von 2002) bei Raumtemperatur (23°C) und bei 50% relativer Luftfeuchte mittels einer computergesteuerten universellen servohydraulischen Prüfmaschine Typ Hydropuls MHF (Fa. Instron GmbH, Darmstadt). Die Prüfung erfolgte mit einer sinusförmigen Spannungslast mit einer Frequenz von 10 Hz und einem Verhältnis R von minimaler zu maximaler Spannungslast von 0,2. Es wurde die Amplitude ΔK zwischen maximalem und minimalen Spannungsintensitätsfaktor K während einer sinusförmigen dynamischen Belastung gemäß der o.g. Norm ermittelt und die Rissausbreitungsgeschwindigkeit da/dN (= Risslängenzunahme in Millimeter pro Schwingspiel) doppelt logarithmisch gegen ΔK (in der Dimension MPa·m^{1/2}), welches während der Messung kontinuierlich gesteigert wurde, aufgetragen. Eine solche Auftragung ist schematisch in Abbildung 2 mit den daraus abgeleiteten, das Ermüdungsrissverhalten beschreibenden Kenngrößen dargestellt.
Als das Ermüdungsrissverhalten beschreibende Kenngrößen wurden ermittelt:
a) Steigung s im linearen Teilbereich (Region II) der zuvor genannten doppelt logarithmischen Auftragung gemäß Abbildung 2. Dieser Wert beschreibt, wie stark die Rissausbreitungsgeschwindigkeit da/dN bei Erhöhung der Belastung zunimmt. Je größer dieser Wert ist, desto schneller erfolgt das Versagen bei Erhöhung der Belastung, d.h. kleinere Werte sind anzustreben.
b) Schwellwert der Spannungsintensitätsfaktoramplitude ΔKₜₕ. Es handelt sich um ein Maß für die lokale Belastung, die überschritten werden muss, damit ein Riss beginnt sich auszubreiten. Der Wert wird gemäß Abbildung 2 abgelesen. Es ist ein möglichst hoher Wert anzustreben.
c) Kritische Spannungsintensitätsfaktoramplitude ΔK_{cf}. Es handelt sich um ein Maß für die lokale Belastung, ab der die Rissausbreitungsgeschwindigkeit instabil wird und somit ein Versagen durch_Bruch erfolgt. Der Wert wird gemäß Abbildung 2 abgelesen. Es ist ein möglichst hoher Wert anzustreben.

Ein gutes Ermüdungsrissverhalten ist somit gekennzeichnet durch eine niedrige Steigung s und möglichst hohe Werte für den Schwellwert der Spannungsintensitätsfaktoramplitude ΔKₜₕ und die kritische Spannungsintensitätsfaktoramplitude ΔK_{cf}.

**Tabelle 1**

| **Komponente** | **V1** | **V2** | **V3** | **4** | **V5** | **V6** | **V7** |
|---|---|---|---|---|---|---|---|
| A | 60 | 60 | 60 | 60 | 60 | 60 | 60 |
| B | 16 | 16 | 16 | 16 | 16 | 16 | 16 |
| C-1 | 24 | | | | | | |
| C-2 | | 24 | | | | | |
| C-3 | | | 24 | | | | |
| C-4 | | | | 24 | | | |
| C-5 | | | | | 24 | | |
| C-6 | | | | | | 24 | |
| C-7 | | | | | | | 24 |
| D | 0,1 | 0,1 | 0,1 | 0,1 | 0,1 | 0,1 | 0,1 |

| **Eigenschaften** | | | | | | | |
|---|---|---|---|---|---|---|---|
| Bindenahtzugfestigkeit [MPa] | 35 | 36 | 38 | 42 | 38 | 40 | 37 |
| Ermüdungsrissverhalten | | | | | | | |
| S | 3,5 | 3,2 | n.g. | 3,0 | 3,1 | 3,2 | 3,8 |
| ΔKₜₕ [MPa m^{1/2}] | 0,42 | 0,39 | n.g. | 0,45 | 0,43 | 0,37 | 0,36 |
| ΔK_{cf} [MPa m^{1/2}] | 3,69 | 3,75 | n.g. | 3,96 | 3,72 | 3,54 | 3,47 |
| ESC (Zeit bis Bruch in Rapsöl @ 2.4%) [h] | 14 | 8 | 8 | 31 | 13 | 46 | n.g. |

Die in Tabelle 1 dargestellten Ergebnisse zeigen, dass sich eine vorteilhafte Kombination aus hoher Bindenahtzugfestigkeit, gutem Ermüdungsrissverhalten und hoher Chemikalienbeständigkeit nur mit der anspruchsgemäßen Zusammensetzung (Beispiele 4 erreichen lässt.

## Patentansprüche

1. Zusammensetzungen enthaltend
A) 10 bis 90 Gew.-% aromatisches Polycarbonat und/oder Polyestercarbonat,
B) 1 bis 50 Gew.-% kautschukbasiertes Pfropfpolymer mit einer Pfropfhülle B.1) bestehend aus mindestens 95 Gew.-%, bezogen auf die Komponente B.1), B.1.1) Styrol und B.1.2) Acrylnitril und optional maximal 5 Gew.-%, bezogen auf die Komponente B.1), mindestens eines weiteren mit B.1.1) und B.1.2) copolymerisierbaren Vinylmonomeren B.1.3) sowie einer kautschukartigen Pfropfgrundlage B.2),
C) 1 bis 50 Gew.-% kautschukfreies Copolymer bestehend aus mindestens 95 Gew.-%, bezogen auf die Komponente C), C.1) Styrol und C.2) Acrylnitril und optional maximal 5 Gew.-%, bezogen auf die Komponente C), mindestens eines weiteren mit C.1) und C.2) copolymerisierbaren Vinylmonomeren C.3),
**dadurch gekennzeichnet, dass** der Gehalt an Acrylnitril C.2) in der Komponente C) um 1,5 bis 8,0 Gew.-%, höher ist als der Gehalt an Acrylnitril B.1.2) in der Pfropfhülle B.1) von Komponente B) und dass die Komponente C ein gewichtsgemitteltes Molekulargewicht Mw bestimmt durch Gelpermeationschromatographie (GPC) in Tetrahydrofuran mit Polystyrol als Standard von 70 bis 200 kDa aufweist.

2. Zusammensetzungen gemäß Anspruch 1, wobei das Gewichtsverhältnis der Komponenten B.1.1) zu B.1.2) im Bereich von 68/32 bis 80/20 liegt.

3. Zusammensetzungen gemäß einem der vorherigen Ansprüche, wobei die Komponente B.1) aus B.1.1) Styrol und B.1.2) Acrylnitril besteht.

4. Zusammensetzungen gemäß einem der vorherigen Ansprüche, enthaltend
40 bis 90 Gew.-% der Komponente A,
5 bis 40 Gew.-% der Komponente B,
5 bis 40 Gew.-% der Komponente C,
0,1 bis 40 Gew.-% Polymeradditive als Komponente D).

5. Zusammensetzungen gemäß einem der vorherigen Ansprüche, enthaltend
50 bis 75 Gew.-% der Komponente A,
10 bis 30 Gew.-% der Komponente B,
10 bis 30 Gew.-% der Komponente C,
0,1 bis 10 Gew.-% der Komponente D

6. Zusammensetzungen gemäß einem der vorherigen Ansprüche, wobei das Gewichtsverhältnis der Komponenten B) zu C) im Bereich 1:3 bis 3:1 liegt.

7. Zusammensetzungen gemäß einem der vorherigen Ansprüche, wobei die Zusammensetzungen zu mindestens 95 Gew.-% aus den Komponenten A), B), C) und D) bestehen.

8. Zusammensetzungen gemäß einem der vorherigen Ansprüche, wobei die Komponente C) ein gewichtsgemitteltes Molekulargewicht Mw von 90 bis 140 kDa bestimmt durch Gelpermeationschromatographie (GPC) in Tetrahydrofuran mit Polystyrol als Standard aufweist.

9. Zusammensetzungen gemäß einem der vorherigen Ansprüche, wobei die Komponente B) zu 40 bis 75 Gew.-% aus einer kautschukartigen und partikulären Pfropfgrundlage B.2) mit einer Glasübergangstemperatur von < -20 °C besteht.

10. Zusammensetzungen gemäß einem der vorherigen Ansprüche, wobei der Gehalt an Acrylnitril C.2) in der Komponente C) um 2,5 bis 4,5 Gew.-% höher ist als der Gehalt an Acrylnitril B.1.2) in der Pfropfhülle von Komponente B).

11. Zusammensetzungen gemäß einem der vorherigen Ansprüche, wobei das Gewichtsverhältnis der Komponenten B.1.1) zu B.1.2) im Bereich von 71/29 bis 75/25 liegt.

12. Zusammensetzungen gemäß einem der vorherigen Ansprüche, wobei die Kautschukmenge in der Zusammensetzung berechnet als Produkt aus der Menge der Komponente B) in der Zusammensetzung in Gew.-% und dem Gewichtsanteil der Komponente B.2) in B) zwischen 7 und 15 Gew.-% liegt.

13. Zusammensetzungen gemäß einem der vorherigen Ansprüche, wobei als Komponente D) mindestens ein Polymeradditiv eingesetzt wird ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, Farbstoffen und Pigmenten und die Zusammensetzungen frei sind von weiteren Polymeradditiven.

14. Verwendung von Zusammensetzungen gemäß einem der Ansprüche 1 bis 13 zur Herstellung von Formkörpern.

15. Formkörper hergestellt aus Zusammensetzungen gemäß einem der Ansprüche 1 bis 13.

## Claims

1. Compositions comprising
A) 10 to 90% by weight of aromatic polycarbonate and/or polyester carbonate,
B) 1 to 50% by weight of rubber-based graft polymer with a graft shell B.1) consisting of at least 95% by weight, based on component B.1), of B.1.1) styrene and B.1.2) acrylonitrile and optionally at most 5% by weight, based on component B.1), of at least one other vinyl monomer B.1.3) copolymerizable with B.1.1) and B.1.2), and also with a rubber-type graft base B.2),
C) 1 to 50% by weight of rubber-free copolymer consisting of at least 95% by weight, based on component C), of C.1) styrene and C.2) acrylonitrile and optionally at most 5% by weight, based on component C), of at least one other vinyl monomer C.3) copolymerizable with C.1) and C.2),
**characterized in that** the content of acrylonitrile C.2) in component C) is higher by 1.5 to 8.0% by weight than the content of acrylonitrile B.1.2) in the graft shell B.1) of component B) and that the weight-average molecular weight Mw of component C, determined by gel permeation chromatography (GPC) in tetrahydrofuran with polystyrene as standard, is 70 to 200 kDa.

2. Compositions according to Claim 1, where the ratio by weight of component B.1.1) to component B.1.2) is in the range of 68/32 to 80/20.

3. Compositions according to any of the preceding claims, where component B.1) consists of B.1.1) styrene and B.1.2) acrylonitrile.

4. Compositions according to any of the preceding claims, comprising
40 to 90% by weight of component A,
5 to 40% by weight of component B,
5 to 40% by weight of component C,
0.1 to 40% by weight of polymer additives as component D).

5. Compositions according to any of the preceding claims, comprising
50 to 75% by weight of component A,
10 to 30% by weight of component B,
10 to 30% by weight of component C,
0.1 to 10% by weight of component D.

6. Compositions according to any of the preceding claims, where the ratio by weight of component B) to component C) is in the range 1:3 to 3:1.

7. Compositions according to any of the preceding claims, where the compositions consist of least 95% by weight of components A), B), C) and D).

8. Compositions according to any of the preceding claims, where the weight-average molecular weight Mw of component C), determined by gel permeation chromatography (GPC) in tetrahydrofuran with polystyrene as standard, is 90 to 140 kDa.

9. Compositions according to any of the preceding claims, where component B) consists of 40 to 75% by weight of a particulate rubber-type graft base B.2) with glass transition temperature < -20°C.

10. Compositions according to any of the preceding claims, where the content of acrylonitrile C.2) in component C) is higher by 2.5 to 4.5% by weight than the content of acrylonitrile B.1.2) in the graft shell of component B).

11. Compositions according to any of the preceding claims, where the ratio by weight of component B.1.1) to component B.1.2) is in the range of 71/29 to 75/25.

12. Compositions according to any of the preceding claims, where the quantity of rubber in the composition, calculated as product of the quantity of component B) in the composition in % by weight and the proportion by weight of component B.2) in B) is between 7 and 15% by weight.

13. Compositions according to any of the preceding claims, where component D) used comprises least one polymer additive selected from the group consisting of lubricants and mould-release agents, stabilizers, flow improvers, compatibilizers, other impact modifiers different from component B, dyes and pigments, and the compositions are free from other polymer additives.

14. Use of compositions according to any of Claims 1 to 13 for the production of mouldings.

15. Mouldings produced from compositions according to any of Claims 1 to 13.

## Revendications

1. Compositions contenant
A) 10 à 90 % en poids de polycarbonate et/ou polyestercarbonate aromatiques,
B) 1 à 50 % en poids de polymère greffé à base de caoutchouc doté d'une enveloppe de greffage B.1) constituée d'au moins 95 % en poids, par rapport au composant B.1), de B.1.1) styrène et de B.1.2) acrylonitrile et éventuellement au maximum 5 % en poids, par rapport au composant B.1), d'au moins un monomère vinylique supplémentaire B.1.3) copolymérisable avec B.1.1) et B.1.2) ainsi que d'une base de greffage B.2) de type caoutchouc,
C) 1 à 50 % en poids de copolymère exempt de caoutchouc constitué d'au moins 95 % en poids, par rapport au composant C), de C.1) styrène et de C.2) acrylonitrile et éventuellement au maximum 5 % en poids, par rapport au composant C), d'au moins un monomère vinylique C.3) supplémentaire copolymérisable avec C.1) et C.2),
**caractérisées en ce que** la teneur en acrylonitrile C.2) dans le composant C) est de 1,5 à 8,0 % en poids plus élevée que la teneur en acrylonitrile B.1.2) dans l'enveloppe de greffage B.1) du composant B) et **en ce que** le composant C présente un poids moléculaire moyen en poids Mw déterminé par chromatographie à perméation de gel (CPG) dans le tétrahydrofuranne avec du polystyrène en tant que référence de 70 à 200 kDa.

2. Compositions selon la revendication 1, le rapport en poids des composants B.1.1) à B.1.2) se situant dans la plage de 68/32 à 80/20.

3. Compositions selon l'une quelconque des revendications précédentes, le composant B.1) étant constitué de B.1.1) styrène et de B.1.2) acrylonitrile.

4. Compositions selon l'une quelconque des revendications précédentes, contenant
40 à 90 % en poids du composant A,
5 à 40 % en poids du composant B,
5 à 40 % en poids du composant C,
0,1 à 40 % en poids d'additifs de polymère en tant que composant D).

5. Compositions selon l'une quelconque des revendications précédentes, contenant
50 à 75 % en poids du composant A,
10 à 30 % en poids du composant B,
10 à 30 % en poids du composant C,
0,1 à 10 % en poids du composant D.

6. Compositions selon l'une quelconque des revendications précédentes, le rapport en poids des composants B) sur C) se situant dans la plage de 1 : 3 à 3 : 1.

7. Compositions selon l'une quelconque des revendications précédentes, les compositions étant constituées d'au moins 95 % en poids des composants A), B), C) et D).

8. Compositions selon l'une quelconque des revendications précédentes, le composant C) présentant un poids moléculaire moyen en poids Mw de 90 à 140 kDa déterminé par chromatographie à perméation de gel (CPG) dans le tétrahydrofuranne avec du polystyrène en tant que référence.

9. Compositions selon l'une quelconque des revendications précédentes, le composant B) étant constitué de 40 à 75 % en poids d'une base de greffage de type caoutchouc et particulaire B.2) dotée d'une température de transition vitreuse inférieure à -20 °C.

10. Compositions selon l'une quelconque des revendications précédentes, la teneur en acrylonitrile C.2) dans le composant C) étant de 2,5 à 4,5 % en poids plus élevée que la teneur en acrylonitrile B.1.2) dans l'enveloppe de greffage du composant B).

11. Compositions selon l'une quelconque des revendications précédentes, le rapport en poids des composants B.1.1) sur B.1.2) se situant dans la plage de 71/29 à 75/25.

12. Compositions selon l'une quelconque des revendications précédentes, la quantité de caoutchouc dans la composition, calculée en tant que produit de la quantité de composant B) dans la composition en % en poids et de la proportion en poids du composant B.2) dans B), se situant entre 7 et 15 % en poids.

13. Compositions selon l'une quelconque des revendications précédentes, en tant que composant D), au moins un additif de polymère choisi dans le groupe constitué par des agents lubrifiants et des agents de démoulage, des stabilisateurs, des promoteurs de fluidité, des agents de compatibilisation, d'autres modificateurs de résistance aux chocs différents du composant B, des colorants et des pigments étant utilisé et les compositions étant exemptes d'autres additifs de polymère.

14. Utilisation de compositions selon l'une quelconque des revendications 1 à 13 pour la fabrication de corps moulés.

15. Corps moulé fabriqué à partir de compositions selon l'une quelconque des revendications 1 à 13.
